# EUROPEAN PATENT SPECIFICATION

(11) **EP 1 847 414 B1**
(45) Date of publication and mention of the grant of the patent: **03.07.2013**
(21) Application number: 07106757.3
(22) Date of filing: 23.04.2007
(51) Int. Cl.: B60K 17/04

(54) **Improvements in and relating to drivelines**
Verbesserungen bei und in Zusammenhang mit Antriebssträngen
Améliorations dans et concernant les transmissions

(30) Priority: 21.04.2006 IE 20060318
(43) Date of publication of application: 24.10.2007
(73) Proprietor: TECHNOLOGY INVESTMENTS LIMITED, County Meath (IE)
(72) Inventor: Timoney, Eanna Pronsias, County Meath (IE)
(74) Representative: O'Connor, Donal Henry

(56) References cited:
- EP-A- 1 231 093
- EP-A- 1 468 859
- GB-A- 1 369 867
- JP-A- 8 338 482
- US-A- 4 542 801
- US-A- 4 771 852

## Description

This invention relates to vehicles and in particular to armoured vehicles and to drivelines for vehicles.

An armoured vehicle with all features of the preamble of independent claim 1 is known by document EP1231093A2.

The object of the invention is the ease of removal and replacement of the power pack in the field and also allowing a power pack assembly to be tested outside the vehicle engine compartment prior to mounting in the vehicle.

According to the invention there is provided an armoured vehicle including an armoured vehicle body, a number of spaced-apart wheel axles being mounted on the body, at least two of said wheel axles being a driveable wheel axle, a power pack mounted in the vehicle body, a drive line driveably connecting said power pack to said driveable wheel axles, said power pack being mounted on the vehicle body above said wheel axles and said drive line including a drop-box to transmit the drive from the power pack to a drive transfer case which splits the drive for delivery to the driveable wheel axles characterised in that a modular power pack assembly is provided in which an engine, an associated transmission and drop-box assembly and an engine cooling system are mounted together in an integral modular unit which in turn is demountably secured within the vehicle body.

In another embodiment of the invention the engine, transmission and drop-box are mounted on a sub frame with the drop-box foremost such that a drive shaft coming from the engine and transmission faces forwardly on the sub frame and is connected to a rearwardly facing drive input of the drop-box, and a drive output of the drop-box faces rearwardly for onward drive transmission to the transfer box.

In another embodiment the drop-box has a drive disconnect means which is operable to disconnect drive from the engine to the driveable wheel axles.

In another embodiment the drop-box includes a parking brake.

In another embodiment the parking brake is located downstream of the drive disconnect means in the drop-box.

In another embodiment the drop-box is close coupled to the transmission and said transmission and said drop-box have separate housings.

In another embodiment the drop-box drive output is connected to the drive transfer case which splits the drive, said drive transfer case having a transverse pair of first drive outputs for connection to wheels at each side of the drive transfer case on a first driveable wheel axle, a forward second drive output at a front of the drive transfer case connected to a forward second driveable wheel axle of the vehicle, and a rearward third drive output at a rear of the drive transfer case connected to a rearward third driveable wheel axle of the vehicle.

In another embodiment an emergency steering pump is mounted on either the drop box or the drive transfer case, the emergency steering pump being driveably connected to the road wheels of the vehicle such that the emergency steering pump is driven by rotation of the road wheels when the vehicle is being towed.

In another embodiment the vehicle is amphibious and the vehicle body has a sealed interior compartment which is sealed against water ingress below the water line when the vehicle is floating in a body of water, the drive transfer case is located outside said sealed interior compartment of the vehicle body, with a liquid tight seal being provided at a drive inlet of the drive transfer case between the drive transfer case and an opening in a vertical bulkhead of said sealed interior compartment through which the drive passes from the drop-box to the drive transfer case.

In another embodiment of the invention the vehicle includes a number of differentials in the driveline and some or all of the differentials in the driveline incorporate an automatically engaged limited slip differential.

In another embodiment a through drive axle unit is mounted in the drive line downstream of the transfer case, said through drive axle unit having a drive input connected to a drive output of the transfer case, a first transverse drive output connected to driveable wheels mounted at each side of the through drive axle unit and a second drive output for onward transmission of drive to a further drive axle located downstream of the through drive axle unit in the drive line.

The invention will be more clearly understood by the following description of some embodiments thereof, given by way of example only, with reference to the accompanying drawings, in which:
Fig. 1 is a sectional elevational view of an armoured vehicle according to the invention;
Fig. 2 is a perspective view of a power pack assembly for the vehicle;
Fig. 3 is an elevational view of the power pack assembly;
Fig. 4 is a plan view of the power pack assembly;
Fig. 5 is an end elevational view of the power pack assembly;
Fig. 6 is a sectional elevational view of a drop-box forming portion of a drive line of the vehicle;
Fig. 7 is a perspective view of a transfer case assembly forming portion of the drive line of the vehicle;
Fig. 8 is a sectional elevational view of the transfer case assembly;
Fig. 9 is a sectional plan view of the transfer case assembly;
Fig. 10 is a perspective view if a through-drive axle unit forming portion of the vehicle drive line;
Fig. 11 is an elevational view of the through-drive axle unit;
Fig. 12 is a sectional elevational view of the through-drive axle unit;
Fig. 13 is a sectional plan view of the through-drive axle unit;
Fig. 14 is a perspective view of a final-drive axle unit forming portion of the vehicle drive line;
Fig. 15 is a sectional plan view of the final-drive axle;
Fig. 16 is a sectional elevational view of the final-drive axle assembly;
Fig. 17 is a sectional elevational view of another armoured vehicle according to a second embodiment of the invention;
Fig. 18 is an elevational view showing a drive line of the vehicle shown in Fig. 17;
Fig. 19 is a plan view of the drive line of Fig. 18;
Fig. 20 is a sectional elevational view of a drop-box forming portion of the drive line of the vehicle of Fig. 17;
Fig. 21 is a perspective view of a transfer case assembly for the drive line of the vehicle of Fig. 17.
Fig. 22 is an elevational view of the transfer case assembly shown in Fig. 21;
Fig. 23 is a sectional elevational view of the transfer case assembly shown in Fig. 21;
Fig. 24 is a perspective view of a through drive axle unit forming portion of the drive line of the vehicle of Fig. 17;
Fig. 25 is an elevational view of the through-drive axle unit shown in Fig. 24;
Fig. 26 is a sectional elevational view of the through-drive axle unit shown in Fig. 24;
Fig. 27 is a perspective view of a final-drive axle unit forming portion of the drive-line of the vehicle shown in Fig. 17;
Fig. 28 is an elevational view of the final-drive axle unit shown in Fig. 27; and
Fig. 29 is a sectional elevational view of the final-drive axle unit shown in Fig. 27.

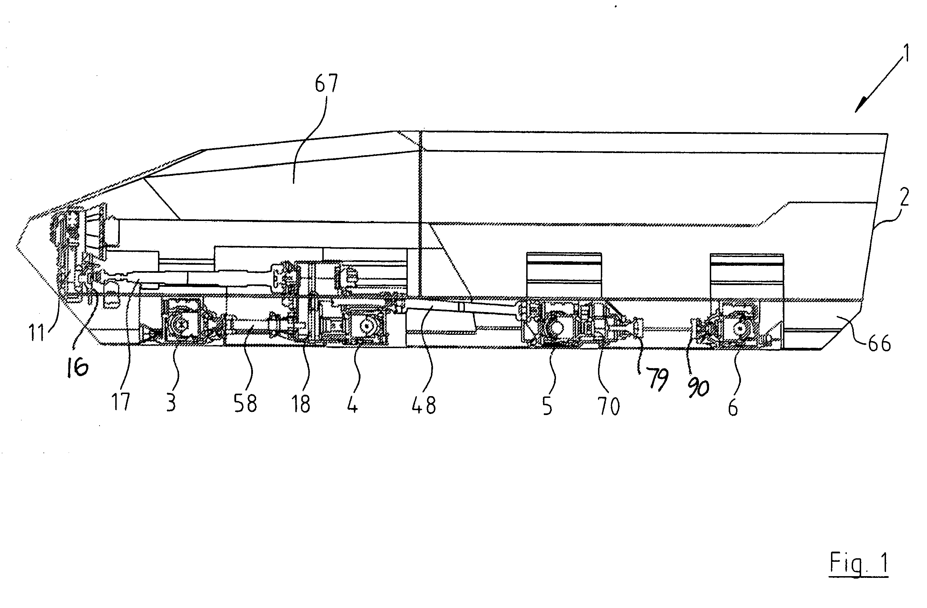

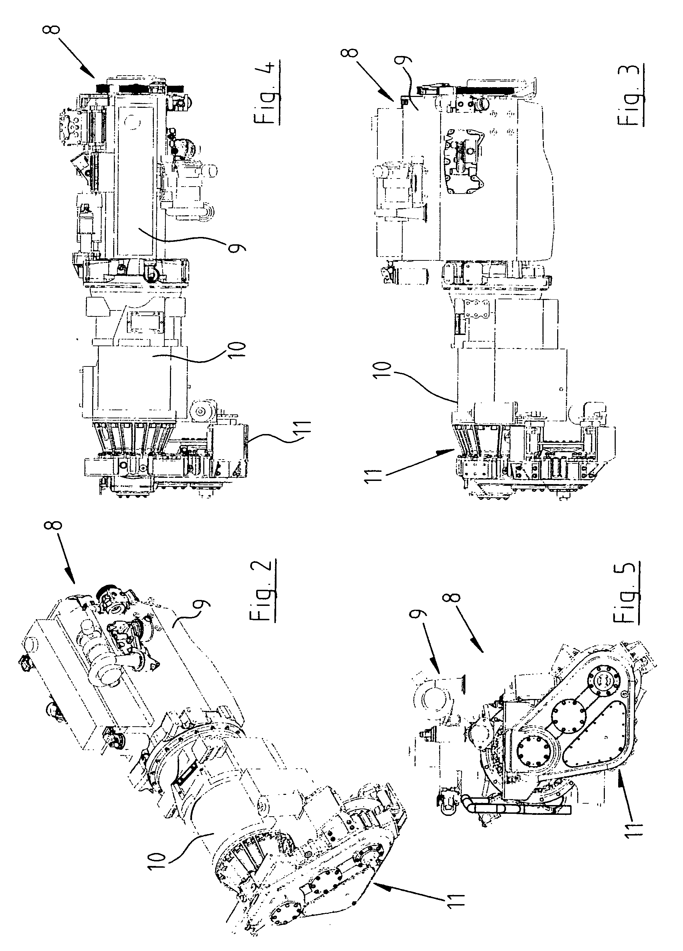

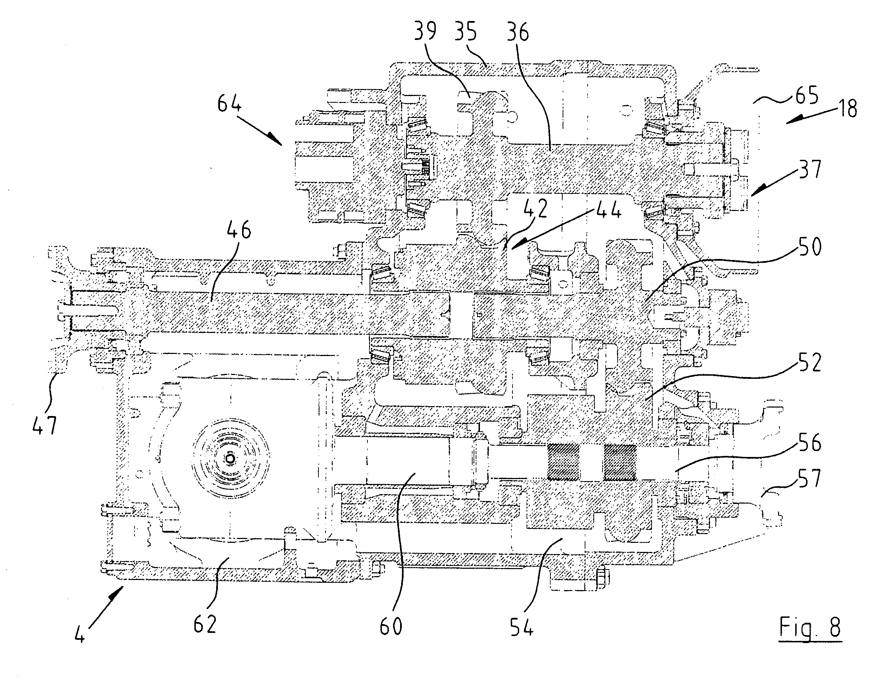

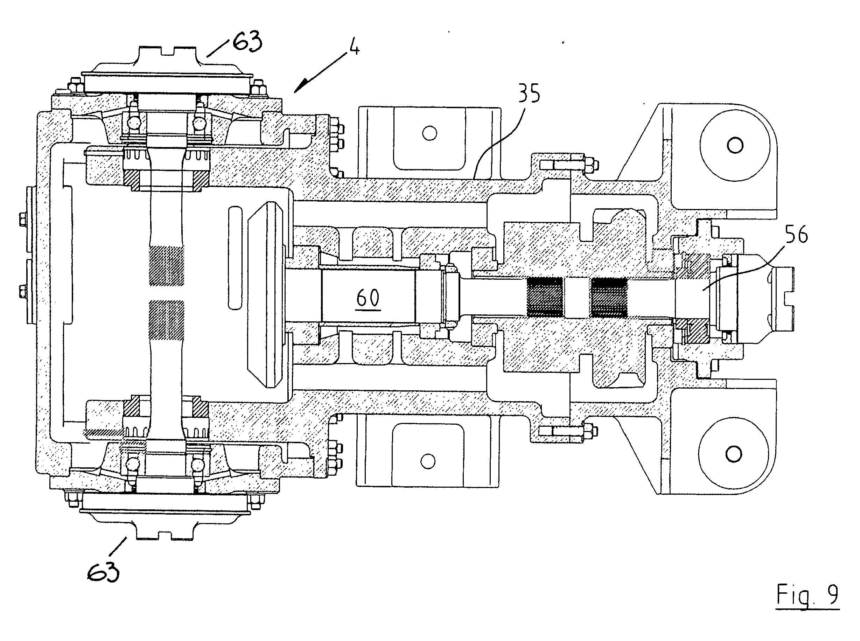

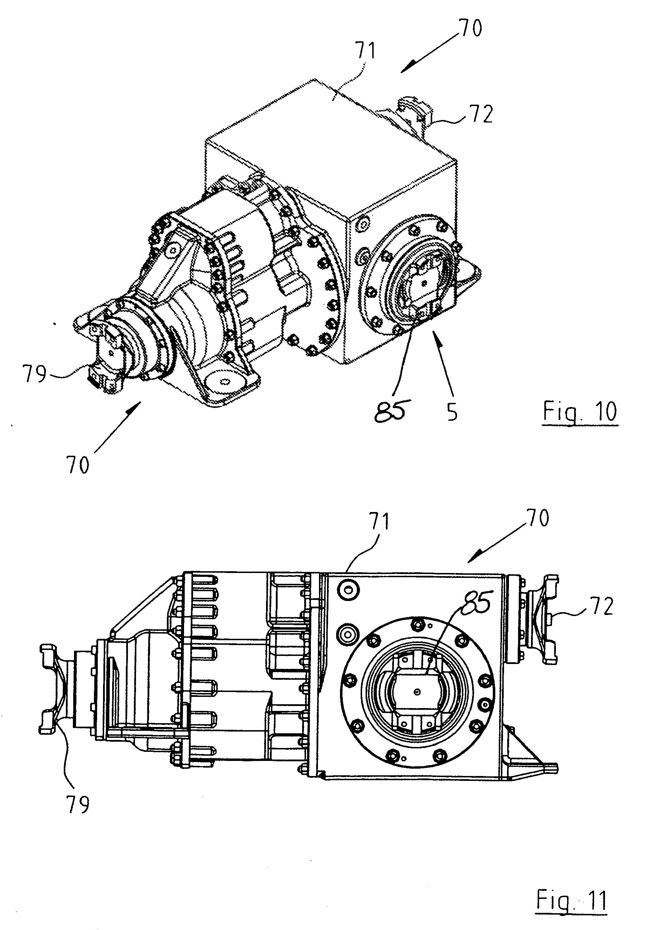

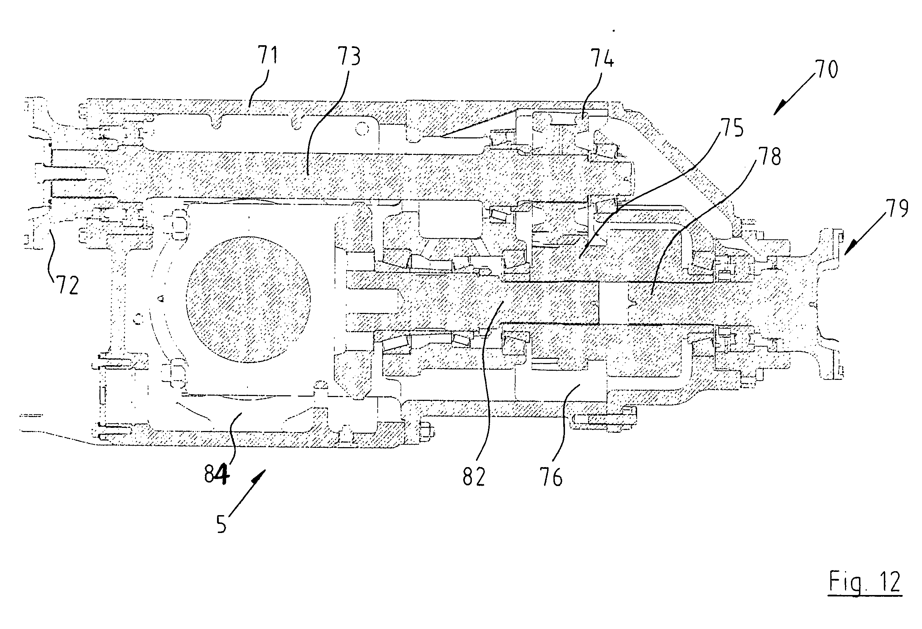

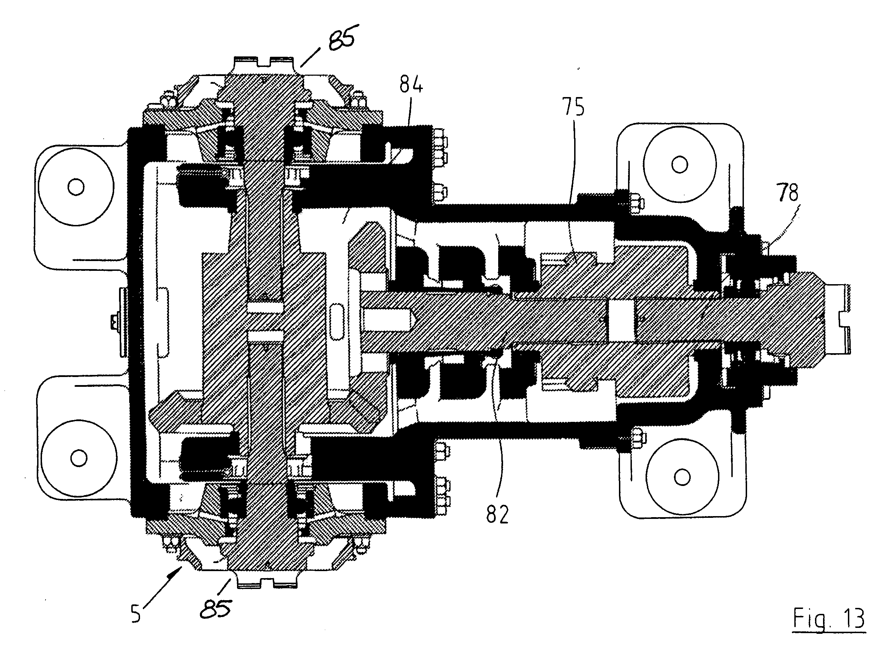

Referring to the drawings, and initially to Figs. 1 to 16 thereof there is illustrated an armoured vehicle according to the invention indicated generally by the reference numeral 1. The armoured vehicle 1 has an armoured vehicle body 2, an interior of which is adapted for the carriage of personnel and/or cargo. A number, in this case four, of spaced-apart driveable wheel (axles 3, 4, 5, 6) 3,4,5,6 are mounted on the body 2. A power pack assembly (Fig. 2) indicated generally by the reference numeral 8 is mounted within the vehicle body 2 and is driveably connected to each driveable wheel axle 3,4,5,6 by means of a vehicle drive line which will be described more fully later.

Preferably a modular power pack assembly 8 is provided having an engine in line with an associated transmission 10 and drop-box assembly 11 mounted together, preferably on a sub frame, forming an integral modular unit which in turn is demountably secured within the vehicle body 2. Conveniently an engine cooling system may also be mounted on the sub frame. This modular power pack assembly advantageously facilitates ease of removal and replacement of the power pack 8 in the field. Also the power pack assembly can be tested outside the vehicle engine compartment before mounting in the vehicle.

It will be noted that the engine 9, transmission 10 and drop-box 11 are mounted on the sub frame with the drop-box 11 foremost such that the drive output from the transmission 10 faces forwardly on the sub frame and is connected to a rearwardly facing drive input 15 of the drop-box 11 and a drive output 16 of the drop-box 11 faces rearwardly for onward drive transmission via a propeller shaft 17 with a transfer case 18 which incorporates the second driveable axle 4.

The drop-box 11 has a housing 20. At the drive input 15 a drive input shaft 21 is rotatably mounted. The drive input shaft 21 carries an input gear 22 which drives an intermediate gear 23 rotatably mounted on the housing 20 which in turn drives an output gear 24 also rotatably mounted on the housing 20. A coupling 26 is mounted on the output gear 24 at the drive output 16 for connection to the propeller shaft 17 for onward drive transmission. A brake disc 28 mounted on the coupling 26 cooperates with an associated calliper 29 to provide a parking brake. A drive disconnect means 29a mounted on the housing 20 is operable to disconnect drive from the engine to the driveable wheel (axles 3, 4, 5, 6).

It will be noted that the transmission 10 and drop box 11 each have separate casing with separate oil supplies.

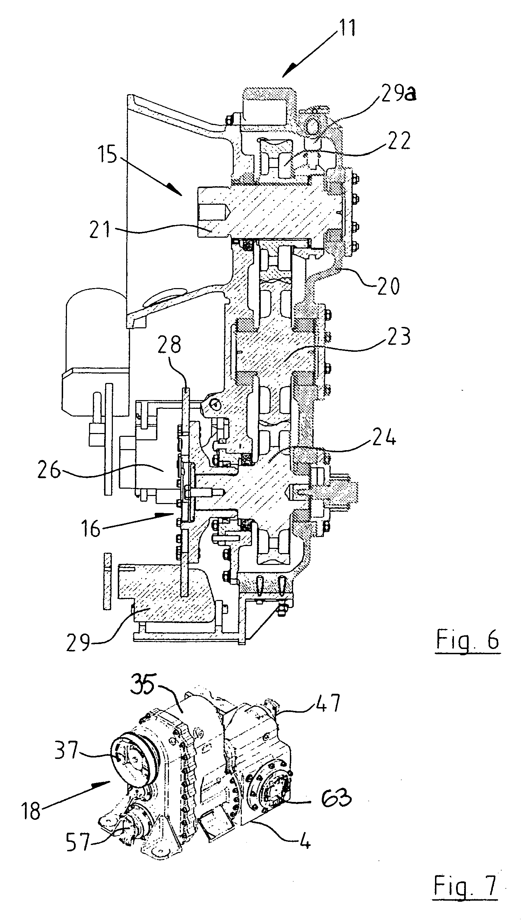

The transfer case 18 is shown in more detail in Fig. 7 to 9. The transfer case 18 has a housing 35 within which is rotatably mounted a drive input shaft 36 having an input end 37 for connection to the propeller shaft 17. A drive input gear 39 on the drive shaft 36 engages with an associated follower gear 42 forming portion of a differential unit 44. A first output shaft 46 of the differential unit 44 is rotatably supported on the housing 35 and has as its outer end a coupling 47 for connection to a second propeller shaft 48 for onward drive transmission towards a rear of the vehicle as can be seen in Fig. 1. A second drive output shaft 50 of the differential unit 44 driveably engages an associated follower gear 52 of a second differential unit 54 mounted within the housing 35. This splits the drive via a forward drive output shaft 56 rotatably mounted on the housing 35 and terminating in a coupling 57 for connection via a third propeller shaft 58 (Fig. 1) with the first or front drive axle 3 of the vehicle 1. A second drive output shaft 60, also rotatably mounted with the housing 35, driveably connects to an axle differential unit 62 of the second driveable wheel axle 4 which is integral with the transfer case 18, for onward drive transmission via transverse drive outputs 63 to wheels at either side of the transfer case 18. An emergency steering pump 64 is mounted on the housing 35 and is driveably connected to the drive input shaft 36.

A bulkhead seal 65, formed by a rubber bellows or the like, sealingly engages with a vertical bulkhead within the vehicle body 2 to provide a watertight seal between a lower portion 66 of the body 2 within which the transfer case 18 and driveable wheel (axles 3, 4, 5, 6) 3, 4, 5, 6 are located and an upper portion 67 of the body 2 forming an interior cabin of the vehicle 1.

Rearward drive transmission from the transfer case 18 through the propeller shaft 48 is to a through drive axle unit 70 which incorporates the third driveable wheel axle 5. The through drive axle unit 70 has a housing 71. A drive input coupling 72 for connection to the propeller shaft 48 is mounted on a drive input shaft 73 which is rotatably mounted within the housing 71. A drive input gear 74 mounted on the drive shaft 73 is driveably engaged with a complementary gear 75 forming portion of a differential unit 76. The differential unit 76 has a first drive output shaft 78 rotatably mounted on the housing 71 and terminating in a coupling 79 for connection to a final propeller shaft connected to the rearmost driveable wheel axle 6. A second drive output shaft 82 rotatably mounted within the housing 71 connects to an axle differential unit 84 of the driveable wheel axle 5 which is incorporated in the through drive axle unit 70 which delivers drive through transverse drive outputs 85 to wheels.

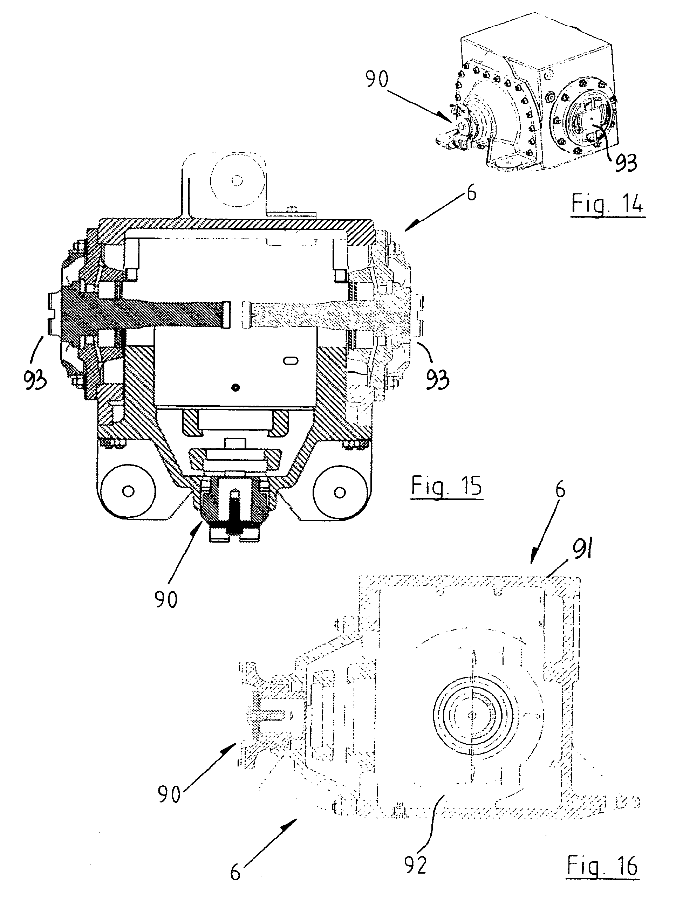

The final drivable wheel axle 6 is shown in more detail in Figs. 14 to 16. This has an input coupling 90 for connection to a propeller shaft delivering the drive to the final drivable wheel axle 6. Drive connects through an axle differential unit 92 mounted within a housing 91 of the final drivable wheel axle 6 and is delivered outwardly through transverse drive outputs 93 and by means of propeller shafts or the like to wheels at each side of the final drivable wheel axle 6.

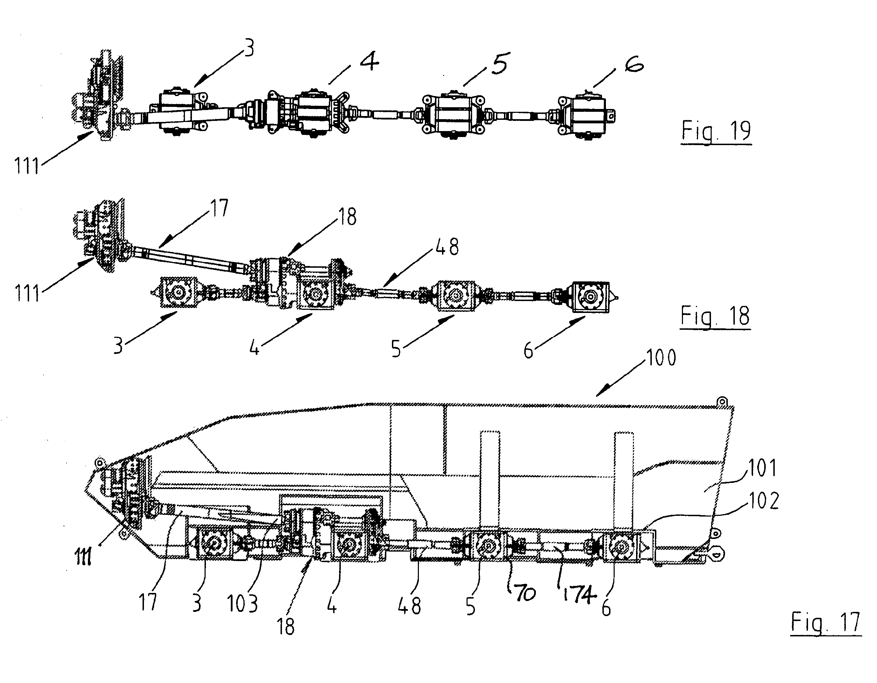

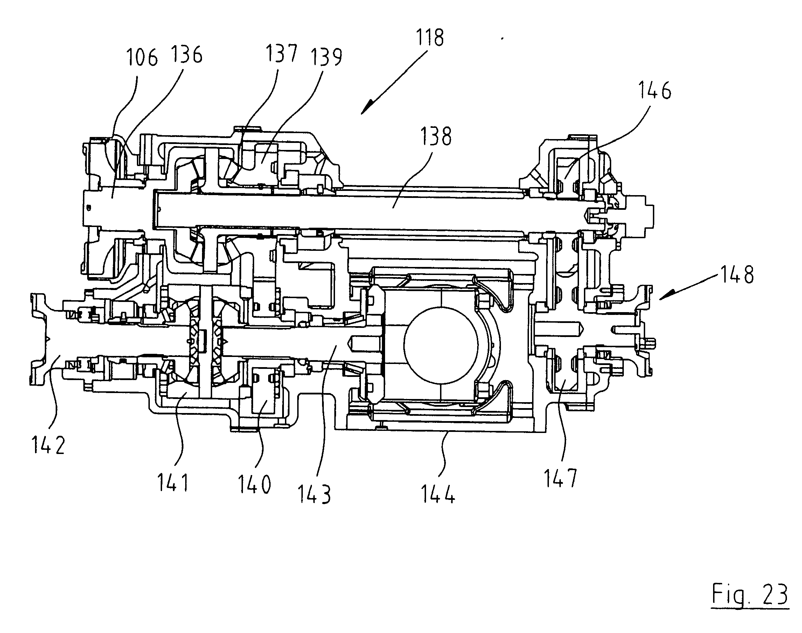

Referring now to Figs. 17 to 29 there is illustrated an armoured vehicle according to a second embodiment of the invention indicated generally by the reference numeral 100. Parts similar to those described previously are assigned the same reference numerals.

Referring initially to Fig. 17 it will be noted that the vehicle 100 is amphibious having a watertight interior compartment 101 above a watertight floor bulk head 102 for carriage of cargo and/or personal. The drive line from the drive transfer case 18 onwards is located outside this watertight compartment 101. The propeller shaft 17 passes through an opening 103 in the floor bulk head 102 of the compartment 101. A watertight seal is achieved at this opening 103 by means of a sealing element 106 mounted between the drive transfer case 18, at the inlet of said drive transfer case 18, and a surround of the opening 103. All of the driveable wheel (axles 3, 4, 5, 6) 3,4,5,6 are also rendered watertight by suitable seals where drive shafts exit the housings of the driveable wheel (axles 3, 4, 5, 6) 3,4,5,6.

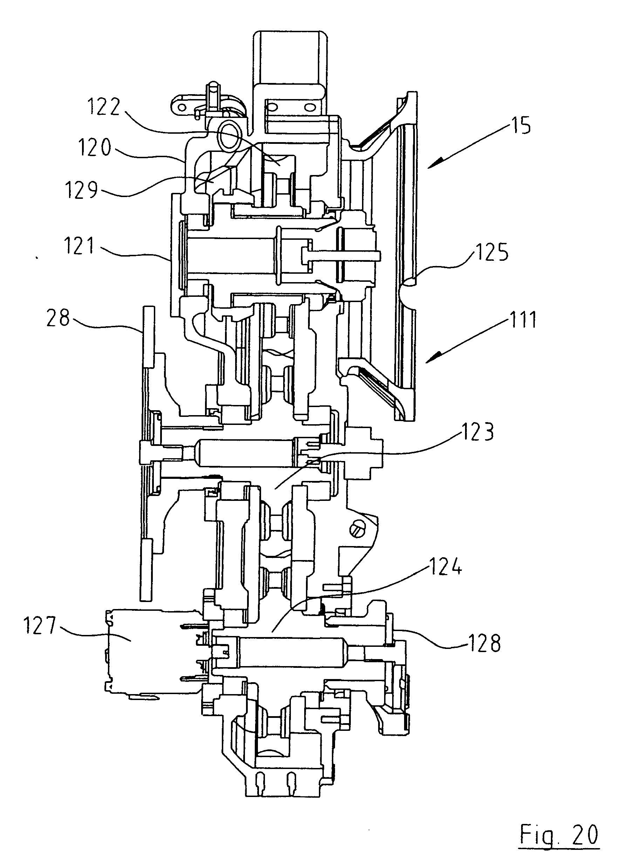

Referring to Fig. 20 a modified drop box 111 for the vehicle 100 is shown. The drop box 111 has a housing 120. Similarly to the drop box 11 described previously the drop box 111 has a drive input shaft 121 with drive input gear 122 driving an intermediate gear 123 which in turn drives an output gear 124. In this case the drive input shaft 121 has an adaptor 125 at the drive input 15 end to facilitate close coupling to the transmission 10. Whilst close coupled this transmission 10 and the drop box 111 have separate casings with separate oil supplies. Also, the intermediate gear 123 carries the brake disc 28. Further, an emergency steering pump 127 is mounted on the housing 120 and driveably connected to the output gear 124. A drive output flange 128 of the drive output gear 124 is in turn driveably connected to the road wheels of the vehicle 100 such that the steering pump 127 is driven when the vehicle is being towed. A drive disconnect 129 mounted on the housing 120 is operable to disconnect drive from the engine to the driveable wheel (axles 3, 4, 5, 6).

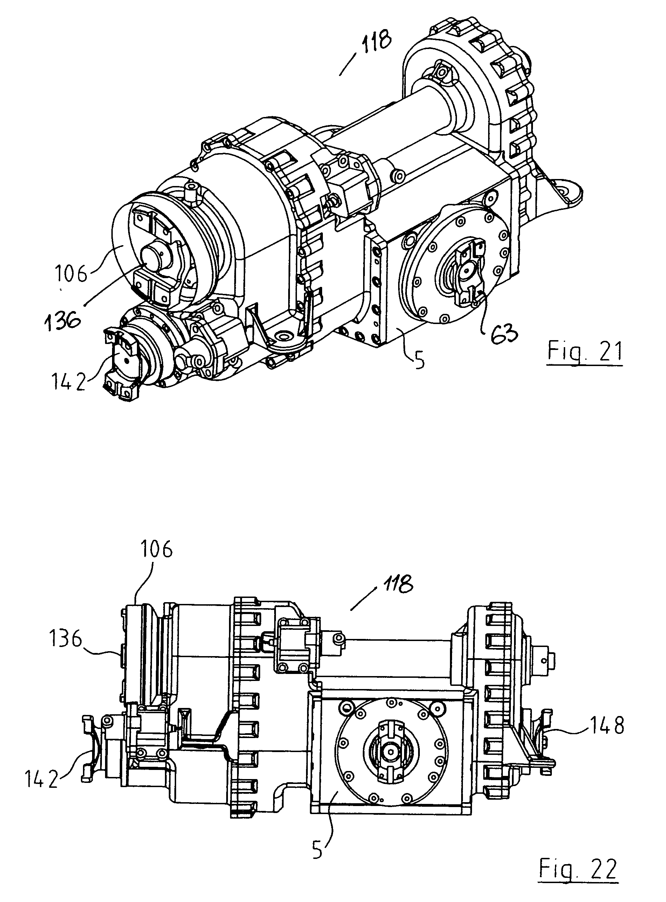

Referring now to Figs. 21 to 23 a modified transfer case 118 for the vehicle 100 is shown. A drive input 136 connects through a differential unit 137 with a drive shaft 138. A forward drive input gear 139 drives a follower gear 140 which in turn driveably connects through differential unit 141 with a forward drive output 142 and rearward drive output 143 driving an axle differential unit 144 driveably connected to wheels mounted at each side of the axle differential unit 144. The drive shaft 138 also drives an onward drive transmission gear 146 which drives a follower 147 with drive output connector 148 for rearward drive transmission by propeller shaft to the through drive axle unit 70.

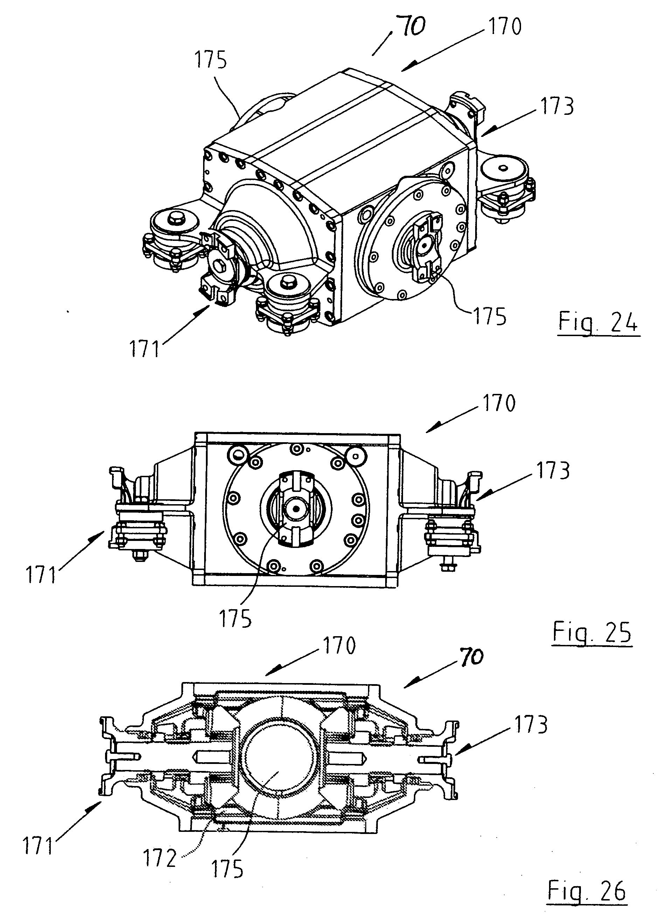

The through drive axle unit 70 is shown in Figs. 24 to 26 and has an outer casing 170 with a front drive input 171 connected through differential unit 172 with a rear drive output 173 which in turn is connected by propeller shaft 174 to the rearmost driveable wheel axle 6. Drive output 175 is also taken to vehicle wheels mounted on either side of the axle casing 170.

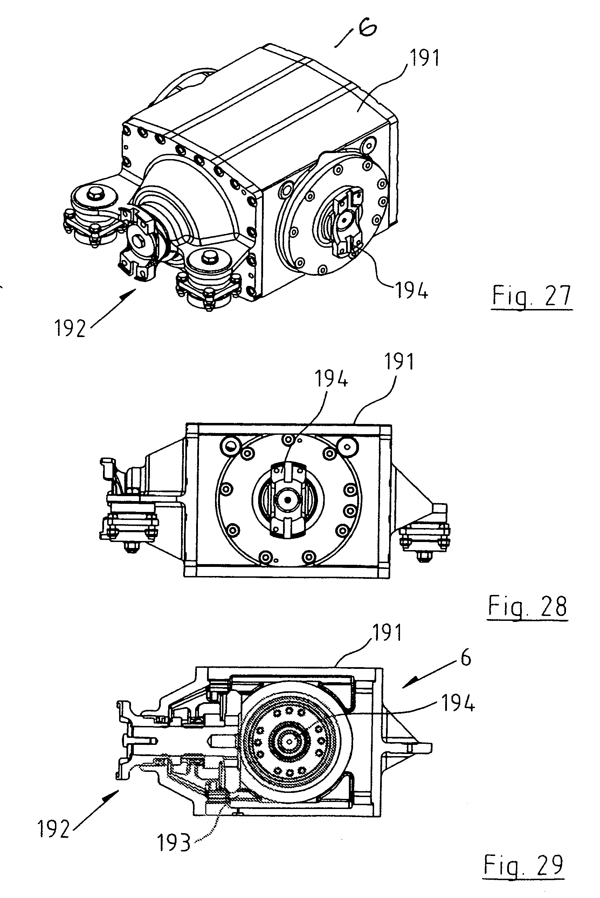

A final drivable wheel axle 6 is shown in Figs. 27 to 29 and has an outer casing 191 within which are mounted a drive input 192 connected to an axle differential unit 193 which is connected by axle drive output 194 to vehicle wheels mounted at each side of the outer casing 191.

The invention is not limited to the embodiments hereinbefore described which may be varied in both construction and detail within the scope of the appended claims.

## Claims

1. An armoured vehicle (1, 100) including:
an armoured vehicle body (2),
a number of spaced-apart wheel axles (3, 4, 5, 6) being mounted on the body (2),
at least two of said wheel axles (3, 4, 5, 6) being a driveable wheel axle,
a power pack (8) mounted in the vehicle body (2),
a drive line driveably connecting said power pack (8) to said driveable wheel axles (3, 4, 5, 6),
said power pack (8) being mounted on the vehicle body (2) above said wheel axles (3, 4, 5, 6) and said drive line including a drop-box (11) to transmit the drive from the power pack (8) to a drive transfer case (18) which splits the drive for delivery to the driveable wheel axles (3, 4, 5, 6),
**characterised in that** a modular power pack assembly (8) is provided in which an engine (9), an associated transmission (10) and drop-box assembly (11) and an engine oooling system are mounted together in an integral modular unit which in turn is demountably secured within the vehicle body (2).

2. An armoured vehicle (1, 100) as claimed in claim 1 wherein the engine (9), transmission (10) and drop-box (11) are mounted on a sub frame with the drop-box (11) foremost such that a drive shaft coming from the engine and transmission faces forwardly on the sub frame and is connected to a rearwardly facing drive input (15) of the drop-box (11), and a drive output (16) of the drop-box (11) faces rearwardly for onward drive transmission to the transfer case (18).

3. An armoured vehicle (1, 100) as claimed in any preceding claim wherein the drop-box (11) has a drive disconnect means (29a) which is operable to disconnect drive from the engine (8) to the driveable wheel axles (3, 4, 5, 6).

4. An armoured vehicle (1, 100) as claimed In any preceding claim wherein the drop-box (11) includes a parking brake.

5. An armoured vehicle (1, 100) as claimed in claim 4 wherein the parking brake is located downstream of the drive disconnect means (29a) in the drop-box (11).

6. An armoured vehicle (1, 100) as claimed in any preceding claim wherein the drop-box (11) is close coupled to the transmission (10) and said transmission (10) and said drop-box (11) have separate housings.

7. An armoured vehicle (1, 100) as claimed in any preceding claim wherein the drop-box (11) drive output (16) is connected to the drive transfer case (18) which splits the drive, said drive transfer case (18) having a transverse pair of first drive outputs (63) for connection to wheels at each side of the drive transfer case (18) on a first driveable wheel axle (4),
a forward second drive output (56) at a front of the drive transfer case (18) connected to a forward second driveable wheel axle (3) of the vehicle, and
a rearward third drive output (47) at a rear of the drive transfer case (18) connected to a rearward third driveable wheel axle (5) of the vehicle.

8. An armoured vehicle (1, 100) as claimed in any preceding claim wherein an emergency steering pump (64, 127) is mounted on either the drop box (11) or drive transfer case (18) and is driveably connected to the road wheels of the vehicle such that the emergency steering pump (64, 127) is driven by rotation of the road wheels when the vehicle is being towed.

9. An armoured vehicle (1, 100) as claimed in any preceding claim wherein the vehicle is amphibious and the vehicle body (2) has a sealed interior compartment (67,101) which is sealed against water ingress below the water line when the vehicle is floating in a body of water, the drive transfer case (18) is located outside said sealed interior compartment (67, 101) of the vehicle body (2), with a liquid tight seal (65, 106) being provided at a drive inlet of the drive transfer case between the drive transfer case (18) and an opening in a vertical bulkhead of said sealed interior compartment (67, 101) through which the drive passes from the drop-box (11) to the drive transfer case (18).

10. An armoured vehicle (1, 100) as claimed in any preceding claim wherein the vehicle includes a number of differentials in the driveline and some or all of the differentials in the driveline incorporate an automatically engaged limited slip differential.

11. An armoured vehicle (1, 100) as claimed in any preceding claim wherein a through drive axle unit (70) is mounted in the drive line downstream of the transfer case (18), said through drive axle unit (70) having a drive input (72) connected to a drive output (47) of the transfer case (18), a first transverse drive output connected to driveable wheels mounted at each side of the through drive axle unit and a second drive output (79) for onward transmission of drive to a further drive axle (6) located downstream of the through drive axle unit (70) In the drive line.

## Patentansprüche

1. Gepanzertes Fahrzeug (1, 100), das Folgendes umfasst:
eine gepanzerte Karosserie (2),
eine Anzahl beabstandeter Radachsen (3, 4, 5, 6), die an der Karosserie (2) angebracht sind,
wobei mindestens zwei der Radachsen (3, 4, 5, 6) eine antreibbare Radachse darstellen,
einen in der Karosserie (2) angebrachten Triebwerksblock (8),
ein Antriebssystem, das den Triebwerksblock (8) antreibend mit den antreibbaren Radachsen (3, 4, 5, 6) verbindet,
wobei der Triebwerksblock (8) an der Karosserie (2) über den Radachsen (3, 4, 5, 6) angebracht ist, und das Antriebssystem eine Drop-Box (11) enthält, um den Antrieb von dem Triebswerksblock (8) zu einem Antriebsverteilergetriebe (18) zu übertragen, das den Antrieb zur Zuführung zu den antreibbaren Radachsen (3, 4, 5, 6) aufteilt,
**dadurch gekennzeichnet, dass** eine modulare Triebwerksblockbaugruppe (8) vorgesehen ist, in der ein Motor (9), ein zugehöriges Getriebe (10) und eine Drop-Box-Baugruppe (11) sowie ein Motorkühlsystem zusammen in einer integrierten Moduleinheit angebracht sind, die ihrerseits demontierbar innerhalb der Karosserie (2) befestigt ist.

2. Gepanzertes Fahrzeug (1, 100) nach Anspruch 1, bei dem der Motor (9), das Getriebe (10) und die Drop-Box (11) an einem Unterrahmen angebracht sind, wobei sich die Drop-Box (11) am weitesten vorne befindet, so dass eine aus dem Motor und Getriebe kommende Antriebswelle an dem Unterrahmen nach vorne weist und mit einem nach hinten weisenden Antriebseingang (15) der Drop-Box (11) verbunden ist, und ein Antriebsausgang (16) der Drop-Box (11) zur weiteren Antriebsübertragung an das Verteilergetriebe (18) nach hinten weist.

3. Gepanzertes Fahrzeug (1, 100) nach einem vorhergehenden Anspruch, bei dem die Drop-Box (11) ein Antriebstrennmittel (29a) aufweist, das betätigt werden kann, um den Antrieb von dem Motor (8) zu den antreibbaren Radachsen (3, 4, 5, 6) zu trennen.

4. Gepanzertes Fahrzeug (1, 100) nach einem vorhergehenden Anspruch, bei dem die Drop-Box (11) eine Parkbremse enthält.

5. Gepanzertes Fahrzeug (1, 100) nach Anspruch 4, bei dem sich die Parkbremse stromabwärts von dem Antriebstrennmittel (29a) in der Drop-Box (11) befindet.

6. Gepanzertes Fahrzeug (1, 100) nach einem vorhergehenden Anspruch, bei dem die Drop-Box (11) dicht an das Getriebe (10) gekuppelt ist, und das Getriebe (10) und die Drop-Box (11) getrennte Gehäuse aufweisen.

7. Gepanzertes Fahrzeug (1, 100) nach einem vorhergehenden Anspruch, bei dem der Antriebsausgang (16) der Drop-Box (11) mit dem Antriebsverteilergetriebe (18) verbunden ist, das den Antrieb aufteilt, wobei das Antriebsverteilergetriebe (18) ein Querpaar von ersten Antriebsausgängen (63) zur Verbindung mit Rädern auf jeder Seite des Antriebsverteilergetriebes (18) an einer ersten antreibbaren Radachse (4) aufweist,
ein vorderer zweiter Antriebsausgang (56) an einer Vorderseite des Antriebsverteilergetriebes (18) mit einer vorderen zweiten antreibbaren Radachse (3) des Fahrzeugs verbunden ist, und
ein hinterer dritter Antriebsausgang (47) an einer Rückseite des Antriebsverteilergetriebes (18) mit einer hinteren dritten antreibbaren Radachse (5) des Fahrzeugs verbunden ist.

8. Gepanzertes Fahrzeug (1, 100) nach einem vorhergehenden Anspruch, bei dem eine Notlenkpumpe (64, 127) entweder an der Drop-Box (11) oder dem Antriebsverteilergetriebe (18) angebracht ist und antreibend mit den Straßenrädern des Fahrzeugs so verbunden ist, dass die Notlenkpumpe (64, 127) durch Drehung der Straßenräder angetrieben wird, wenn das Fahrzeug abgeschleppt wird.

9. Gepanzertes Fahrzeug (1, 100) nach einem vorhergehenden Anspruch, wobei das Fahrzeug ein Amphibienfahrzeug darstellt und die Karosserie (2) einen abgedichteten Innenraum (67, 101) aufweist, der gegen das Eindringen von Wasser unter der Wasseroberfläche abgedichtet ist, wenn das Fahrzeug in einem Gewässer schwimmt, und das Antriebsverteilergetriebe (18) sich außerhalb des abgedichteten Innenraums (67, 101) der Karosserie (2) befindet, wobei eine flüssigkeitsundurchlässige Dichtung (65, 106) an einem Antriebseingang des Antriebsverteilergetriebes zwischen dem Antriebsverteilergetriebe (18) und einer Öffnung in einer vertikalen Trennwand des abgedichteten Innenraums (67, 101) vorgesehen ist, durch die der Antrieb von der Drop-Box (11) zu dem Antriebsverteilergetriebe (18) hindurchgeht.

10. Gepanzertes Fahrzeug (1, 100) nach einem vorhergehenden Anspruch, wobei das Fahrzeug eine Anzahl von Differenzialen in dem Antriebssystem umfasst, und einige oder alle der Differenziale in dem Antriebssystem ein automatisch eingesetztes Sperrdifferenzial enthalten.

11. Gepanzertes Fahrzeug (1, 100) nach einem vorhergehenden Anspruch, bei dem eine Durchgangsantriebsachseneinheit (70) in dem Antriebssystem stromabwärts von dem Verteilergetriebe (18) angebracht ist, wobei die Durchgangsantriebsachseneinheit (70) einen Antriebseingang (72) verbunden mit einem Antriebsausgang (47) des Verteilergetriebes (18), einen ersten Querantriebsausgang verbunden mit antreibbaren Rädern, die auf jeder Seite der Durchgangsantriebsachseneinheit angebracht sind, und einen zweiten Antriebsausgang (79) für weitere Übertragung von Antrieb zu einer weiteren Antriebsachse (6) aufweist, die sich stromabwärts von der Durchgangsantriebsachseneinheit (70) in dem Antriebssystem befindet.

## Revendications

1. Véhicule blindé (1, 100) comprenant :
une carrosserie (2) de véhicule blindé,
un certain nombre d'essieux de roues espacés les uns des autres (3, 4, 5, 6) étant montés sur la carrosserie (2),
au moins deux desdits essieux de roues (3, 4, 5, 6) étant un essieu de roues en mesure d'être entraînées,
un groupe moteur (8) monté dans la carrosserie (2) du véhicule,
un ensemble de transmission raccordant par entraînement ledit groupe moteur (8) auxdits essieux de roues en mesure d'être entraînées (3, 4, 5, 6),
ledit groupe moteur (8) étant monté sur la carrosserie (2) du véhicule au-dessus desdits essieux de roues (3, 4, 5, 6) et ledit ensemble de transmission comprenant une boîte de réduction (11) permettant de transmettre l'entraînement du groupe moteur (8) à une boîte de transfert d'entraînement (18) qui divise l'entraînement à des fins de distribution aux essieux de roues en mesure d'être entraînées (3, 4, 5, 6),
**caractérisé en ce qu'**un ensemble groupe moteur modulaire (8) est mis en oeuvre dans lequel un moteur (9), un ensemble associé constitué d'une transmission (10) et d'une boîte de réduction (11) et un système de refroidissement de moteur sont montés ensemble dans une unité modulaire intégrale qui à son tour est assujettie de manière démontable à l'intérieur de la carrosserie (2) du véhicule.

2. Véhicule blindé (1, 100) selon la revendication 1, dans lequel le moteur (9), la transmission (10) et la boîte de réduction (11) sont montés sur un faux cadre, la boîte de réduction (11) se trouvant le plus en avant de sorte qu'un arbre d'entraînement provenant du moteur et de la transmission est orienté vers l'avant sur le faux cadre et est raccordé à une entrée d'entraînement orientée vers l'arrière (15) de la boîte de réduction (11), et une sortie d'entraînement (16) de la boîte de réduction (11) est orientée vers l'arrière à des fins de transmission d'entraînement continue à la boîte de transfert (18).

3. Véhicule blindé (1, 100) selon l'une quelconque des revendications précédentes, dans lequel la boîte de réduction (11) a un moyen de désaccouplage d'entraînement (29a) qui sert à désaccoupler l'entraînement allant du moteur (8) aux essieux de roues en mesure d'être entraînées (3, 4, 5, 6).

4. Véhicule blindé (1, 100) selon l'une quelconque des revendications précédentes, dans lequel la boîte de réduction (11) comprend un frein de stationnement.

5. Véhicule blindé (1, 100) selon la revendication 4, dans lequel le frein de stationnement se trouve en aval du moyen de désaccouplage d'entraînement (29a) dans la boîte de réduction (11).

6. Véhicule blindé (1, 100) selon l'une quelconque des revendications précédentes, dans lequel la boîte de réduction (11) est à couplage direct par rapport à la transmission (10) et ladite transmission (10) et ladite boîte de réduction (11) ont des carters séparés.

7. Véhicule blindé (1, 100) selon l'une quelconque des revendications précédentes, dans lequel la sortie d'entraînement (16) de la boîte de réduction (11) est raccordée à la boîte de transfert d'entraînement (18) qui divise l'entraînement, ladite boîte de transfert d'entraînement (18) ayant une paire transversale de premières sorties d'entraînement (63) à des fins de raccordement aux roues de chaque côté de la boîte de transfert d'entraînement (18) sur un premier essieu de roues en mesure d'être entraînées (4),
une seconde sortie d'entraînement avant (56) au niveau d'une partie avant de la boîte de transfert d'entraînement (18) raccordée à un second essieu de roues en mesure d'être entraînées avant (3) du véhicule, et
une troisième sortie d'entraînement arrière (47) au niveau de la partie arrière de la boîte de transfert d'entraînement (18) raccordée à un troisième essieu de roues en mesure d'être entraînées arrière (5) du véhicule.

8. Véhicule blindé (1, 100) selon l'une quelconque des revendications précédentes, dans lequel une pompe de direction de secours (64, 127) est montée sur soit la boîte de réduction (11) soit la boîte de transfert d'entraînement (18) et est raccordée par entraînement aux roues porteuses du véhicule de sorte que la pompe de direction de secours (64, 127) est entraînée par la rotation des roues porteuses quand le véhicule est remorqué.

9. Véhicule blindé (1, 100) selon l'une quelconque des revendications précédentes, dans lequel le véhicule est amphibie et la carrosserie (2) du véhicule a un compartiment intérieur scellé (67, 101) qui est scellé contre toute infiltration d'eau sous la ligne de flottaison quand le véhicule flotte dans une masse d'eau, la boîte de transfert d'entraînement (18) se trouve à l'extérieur dudit compartiment intérieur scellé (67, 101) de la carrosserie (2) du véhicule, une fermeture étanche aux liquides (65, 106) étant mise en oeuvre au niveau de l'entrée d'entraînement de la boîte de transfert d'entraînement entre la boîte de transfert d'entraînement (18) et une ouverture dans une cloison verticale dudit compartiment intérieur scellé (67, 101) au travers de laquelle l'entraînement passe de la boîte de réduction (11) à la boîte de transfert d'entraînement (18).

10. Véhicule blindé (1, 100) selon l'une quelconque des revendications précédentes, dans lequel le véhicule comprend un certain nombre de différentiels dans l'ensemble de transmission et certains des différentiels, ou tous, dans l'ensemble de transmission incorporent un différentiel à glissement limité à mise en prise automatique.

11. Véhicule blindé (1, 100) selon l'une quelconque des revendications précédentes, dans lequel une unité de pont moteur direct (70) est montée dans l'ensemble de transmission en aval de la boîte de transfert (18), ladite unité de pont moteur direct (70) ayant une entrée d'entraînement (72) raccordée à une sortie d'entraînement (47) de la boîte de transfert (18), une première sortie d'entraînement dans le sens transversal raccordée à des roues en mesure d'être entraînées montées de chaque côté de l'unité de pont moteur direct et une seconde sortie d'entraînement (79) à des fins de transmission continue de l'entraînement au niveau d'un autre essieu d'entraînement (6) se trouvant en aval de l'unité de pont moteur direct (70) dans l'ensemble de transmission.
